(19) Europäisches Patentamt
European Patent Office
Office européen des brevets

(11) **EP 1 842 877 A1**

(12) **EUROPEAN PATENT APPLICATION**
published in accordance with Art. 158(3) EPC

(43) Date of publication:
**10.10.2007 Bulletin 2007/41**

(51) Int Cl.:
***C08L 67/00*** (2006.01)   ***C08J 9/04*** (2006.01)
***C08K 5/55*** (2006.01)

(21) Application number: **05703766.5**

(22) Date of filing: **18.01.2005**

(86) International application number:
**PCT/JP2005/000529**

(87) International publication number:
**WO 2006/077623 (27.07.2006 Gazette 2006/30)**

(84) Designated Contracting States:
**AT BE BG CH CY CZ DE DK EE ES FI FR GB GR HU IE IS IT LI LT LU MC NL PL PT RO SE SI SK TR**

(71) Applicant: **TOHO CHEMICAL INDUSTRY CO., LTD. Tokyo 104-0044 (JP)**

(72) Inventors:
• **AKIMOTO, Mikio,**
**TOHO CHEMICAL INDUSTRY CO. LTD**
**Yokosuka-shi, Kanagawa 2370062 (JP)**
• **GOINO, Masaya,**
**TOHO CHEMICAL INDUSTRY CO. LTD**
**Sodegaura-shi, Chiba 2990296 (JP)**

• **NAGASAWA, Kazuyuki,**
**TOHO CHEMICAL INDUSTRY CO. LTD**
**Yokosuka-shi, Kanagawa 2370062 (JP)**
• **KAKITA, Yasuhiro,**
**TOHO CHEMICAL INDUSTRY CO., LTD**
**Sodegaura-shi, Chiba 2990296 (JP)**

(74) Representative: **Schaad, Balass, Menzl & Partner AG**
**Dufourstrasse 101**
**Postfach**
**8034 Zürich (CH)**

(54) **BIODEGRADABLE POLYESTER RESIN COMPOSITION**

(57)    [Object] To provide a biodegradable polyester resin composition that can achieve excellent antistatic properties and surface lubricity while maintaining the molecular weight without deteriorating the appearance of the resin, even if a kneading method is employed.

[Solving Means] A biodegradable polyester resin composition containing 0.05 to 10.0% by weight of a borate ester surfactant (a reactant of boric acid and a compound given by esterifying a polyol with a higher fatty acid, a salt of the reactant, a reactant obtained by reacting a higher fatty acid to a compound given by esterifying a polyol with boric acid, or the like) having one or more hydrophobic groups having 8 to 24 carbon atoms.

**EP 1 842 877 A1**

**Description**

Technical Field

The present invention relates to a biodegradable polyester resin composition having an excellent antistatic ability. More specifically, the present invention relates to a polylactic acid resin composition which is a recyclable resource derived from a plant.

Background Art

Plastics, such as polypropylene, polyethylene, or polyvinyl chloride, made from fossil resources such as petroleum are processed into food wrapping films, electric appliances, and industrial materials. Thus, plastics are indispensable and very important for our daily lives. However, it is the well-known fact that, since plastics are not biodegradable, they continue to remain almost permanently in the natural environment when they are unnecessary after the use and have a significant effect on the ecosystem, which causes environmental destruction in various aspects.

In such circumstances, attention has been focused on biodegradable polyester resins. Among them, biodegradable resins made from plant materials are notable in an attempt to shift to biodegradable resins from plastics made from fossil resources. Particularly, in recent years, attention has been focused on a polylactic acid resin of which production is significantly increasing. This is caused by the expectation that the polylactic acid resin synthesized from sugar derived from plants such as corn and potato or lactic acid given by fermentation thereof can construct a material recycling system for recyclable resources, though various types of plastics made from fossil resources deviate from such a recycling system in the social background that the material recycling system for saving limited fossil resources and thoroughly recycling natural resources is brought as an issue.

The raw material of the polylactic acid resin is synthesized from sugar derived from a crop such as corn or potato, which is a renewable resource, or lactic acid given by fermentation of the crop. In addition, the polylactic acid resin which becomes unnecessary is readily hydrolyzed and degraded by microorganisms in the natural environment and is finally decomposed into water and carbon dioxide.

Further, it is known that molded products such as films and sheets formed of biodegradable polyester resins such as a polylactic acid resin exhibit performance equivalent to that of conventional plastics. In particular, a polylactic acid resin has very high transparency and can be widely applied to wrapping materials in which the transparency is important.

Thus, the biodegradable polyester resin is usable for molded products such as films and sheets with many advantages. However, since the biodegradable polyester resin also has electrical insulation which is particular to resin similar to general resins, it is readily electrostatically charged and has many problems caused by the electrostatic charge, for instance, shedding of ink in printing, dispersing of contents in packaging, or impairment of the appearance by adhesion of dust to products.

To solve the electrostatic problem, in Patent Document 1, the antistatic property is achieved by applying an aqueous coating liquid containing a surfactant to at least one surface of an aliphatic polyester film. In addition, in Patent Document 2, the antistatic property is achieved by applying a liquid containing a specific anionic surfactant or a specific nonionic surfactant to a polylactic acid-based biaxially oriented film.

However, in such application methods, generally, the application step is an additional step after the formation of resin and therefore causes an increase in the cost. In addition, the application methods have particular problems such as sliding properties, inferior in transparency, and lack of sustainability of antistatic properties.

In addition to the methods in which a surfactant is applied to a surface of molded products such as films, a kneading method in which a surfactant is previously added to a resin is known.

In the kneading method, since a surfactant is previously kneaded in a resin, the surfactant bleeds out to the surface of a molded product after molding and exerts the ability. Further, even if the surfactant on the surface is wiped away, the surfactant bleeds out from the resin to recover the effect. Thus, the kneading method has an advantage to exert the sustainability to a certain degree. In the kneading method, the ability is thus achieved by that the surfactant further bleeds out from the resin, but the degree of the bleeding out is thought to largely depending on the crystalline properties, such as the crystallinity degree and crystalline orientation state, of the resin and compatibility between the resin and the surfactant.

Further, the compatibility between the crystallinity of a resin and a surfactant highly affects the appearance of the resin. The addition of an improper surfactant deteriorates the appearance of the biodegradable polyester resin. In addition, the molecular weight is decreased to cause deterioration in the strength. Thus, the kneading method has problems. Particularly, in the polylactic acid resin which is characterized by its transparency, it is required not to decrease the transparency.

Patent Document 3 discloses to provide a film and sheet having antistatic properties by mixing a polyol and fatty acid ester thereof in a polylactic acid resin. In Patent Document 4, antistatic properties are achieved by mixing a nonionic surfactant consisting of glycerin fatty acid ester in polylactic acid. In addition, in Patent Document 5, antistatic properties are achieved by mixing a nonionic surfactant containing glycerin fatty acid ester in a caprolactone-based resin as a biodegradable resin.

Thus, many studies for kneading of a nonionic surfactant in a biodegradable resin have been conducted. However, actually, antistatic properties are not sufficiently obtained by the addition of a nonionic surfactant because of the crystallinity particular to the biodegradable polyester resin and the balance in compatibility between the resin and the surfactant. Therefore, further improvement is necessary. Furthermore, in a molded product, such as a film and a sheet, obtained by processing a resin, it is preferable that the surface have lubricity during the manufacturing process. However, a suitable lubricant for this requirement has not been found yet.

Patent Document 1: Japanese Patent Application Laid-open No. Hei 10-86307 (pp. 1-14)
Patent Document 2: Japanese Patent Application Laid-open No. Hei 14-12687 (pp. 1-6)
Patent Document 3: Japanese Patent Application Laid-open No. Hei 9-221587 (pp. 1-9)
Patent Document 4: Japanese Patent Application Laid-open No. Hei 10-36650 (pp. 1-14)
Patent Document 5: Japanese Patent Application Laid-open No. Hei 14-60603 (pp. 1-5)

Disclosure of Invention

Problems to Be Solved by the Invention

Under such circumstances, an object of the present invention is to provide a biodegradable polyester resin composition which can achieve excellent antistatic properties and surface lubricity while maintaining the molecular weight without deteriorating the appearance of the resin even if a kneading method is employed. Another object of the present invention is to provide a resin molded product composed of a composition having such good characteristics.

Means for Solving the Problems

The present inventors have conducted intensive studies for solving the above-mentioned problems and have completed the present invention of a biodegradable polyester resin composition having excellent antistatic properties. That is, the present invention provides a biodegradable polyester resin composition containing 0.05 to 10.0% by weight of a borate ester surfactant having one or more hydrophobic groups having 8 to 24 carbon atoms. Further, in a preferable mode of the present invention, the borate ester surfactant is a reactant of boric acid and a compound given by esterifying a polyol with a higher fatty acid or is a salt of the reactant. Further, in another preferable mode of the present invention, the borate ester surfactant is a reactant of a higher fatty acid and a compound given by esterifying a polyol with boric acid or is a salt of the reactant. The biodegradable polyester resin composition according to the present invention is specifically excellent in the antistatic properties and surface lubricity, and polylactic acid resin also achieves a preferable effect in antistatic properties and surface lubricity. Furthermore, the present invention provides a resin molded product such as a film or sheet composed of the above-mentioned resin composition.

Advantageous Effect of the Invention

The biodegradable polyester resin composition containing 0.05 to 10.0% by weight of a borate ester surfactant having one or more hydrophobic groups having 8 to 24 carbon atoms according to the present invention can achieve excellent antistatic properties and surface lubricity while maintaining the molecular weight without deteriorating the appearance of the resin.

Best Mode for Carrying Out the Invention

The present invention will now be described in detail.
The borate ester surfactant according to the present invention has one or more hydrophobic groups having 8 to 24 carbon atoms. Such a borate ester surfactant can be obtained by reacting boric acid with a compound given by esterifying a polyol with a higher fatty acid or obtained by reacting a higher fatty acid with a compound given by esterifying a polyol with boric acid.
The borate ester surfactant according to the present invention can be synthesized from a polyol, a higher fatty acid, and boric acid as a mixture of a plurality of compounds such as a monomer, polymer, and reaction by-product. Therefore, the structures of final compounds differ in a strict sense depending on the synthesis procedure, even if the same raw materials are used.

The polyol in the present invention is not especially limited, but examples thereof include alkylene oxide adducts of glycerin, diglycerin, triglycerin, polyglycerin, arabitol, sorbitol, pentaerythritol, polypentaerythritol, glucose, lactose, monosaccharide, sucrose, and/or ethylene oxide or propylene oxide thereof; and ethylene glycol, propylene glycol, and butylene glycol.

The higher fatty acid according to the present invention has 8 to 24 carbon atoms, may be a saturated fatty acid or an unsaturated fatty acid, and may have a straight chain or a branched chain. The higher fatty acid is not especially limited, but examples thereof include caprylic acid, 2-ethylhexanic acid, capric acid, nonanoic acid, lauric acid, myristic acid, palmitic acid, stearic acid, isostearic acid, oleic acid, linoleic acid, linolenic acid, docosanoic acid, and behenic acid. When the number of carbon atoms is in such a range, good antistatic properties can be achieved, no deterioration of a working environment occurs by the smoking of a surfactant during a resin-processing process, and the appearance of the resin is not deteriorated.

Examples of the borate ester surfactant according to the present invention include salts of a reactant of boric acid and a higher fatty acid ester of a polyol and a reactant of a higher fatty acid and a borate ester of a polyol. Specifically, the examples include alkali metal salts and alkaline earth metal salts such as sodium salts, potassium salts and magnesium salts; and organic amine salts such as ammonia, diethanolamine and triethanolamine of the reactants. Preferable examples are sodium salts and potassium salts.

The borate ester surfactant according to the present invention which is obtained by reacting boric acid with a compound given by esterification of a polyol with a higher fatty acid can be obtained by a known method.

The esterification reaction between a polyol and a higher fatty acid can be performed by a known method. The molecular ratio in the reaction is not especially limited, but 1.0 to 2.0 mol of a higher fatty acid to 1 mol of a polyol is preferable. A monoester, diester, triester, or higher polyester is produced depending on the molecular ratio in the reaction of the polyol and the higher fatty acid. A higher purity of the monoester by distillation is desirable, but the degree of esterification is not especially limited and different degrees of esterification may exist. Further, the reaction of boric acid with a compound given by esterification of a polyol with a higher fatty acid can be performed by a known method. The molecular ratio in the reaction is not especially limited, but the amount of boric acid is preferably 0.1 to 5.0 mol, more preferably 0.5 to 2.0 mol per 1 mol of a compound given by esterification of a polyol with a higher fatty acid.

Examples of the borate ester surfactant obtained by the above-mentioned method include a reactant of glycerin monolaurate and boric acid, a reactant of glycerin monostearate and boric acid, a reactant of glycerin monooleate and boric acid, a reactant of glycerin dilaurate and boric acid, a reactant of glycerin distearate and boric acid, a reactant of diglycerin monolaurate and boric acid, a reactant of diglycerin monostearate and boric acid, a reactant of diglycerin monooleate and boric acid, a reactant of diglycerin dilaurate and boric acid, a reactant of diglycerin distearate and boric acid, a reactant of diglycerin trilaurate and boric acid, a reactant of polyglycerin monolaurate and boric acid, a reactant of polyglycerin dilaurate and boric acid, a reactant of polyoxyethylene glycerin monolaurate and boric acid, a reactant of polyoxypropylene glycerin monolaurate and boric acid, a reactant of sorbitol monolaurate and boric acid, a reactant of sorbitol monostearate and boric acid, a reactant of sorbitol monooleate and boric acid, a reactant of polyoxyethylene sorbitol monolaurate and boric acid, a reactant of polyoxyethylene sorbitol monostearate and boric acid, a reactant of pentaerythritol monolaurate and boric acid, a reactant of pentaerythritol monostearate and boric acid, a reactant of pentaerythritol dilaurate and boric acid, a reactant of sucrose monolaurate and boric acid, a reactant of sucrose monostearate and boric acid, a reactant of sucrose monooleate and boric acid, a reactant of polyethylene glycol monolaurate and boric acid, a reactant of polypropylene glycol monolaurate and boric acid, a sodium salt of a reactant of glycerin monolaurate and boric acid, a sodium salt of a reactant of glycerin monooleate and boric acid, a potassium salt of a reactant of glycerin distearate and boric acid, a sodium salt of a reactant of diglycerin monolaurate and boric acid, a calcium salt of a reactant of polyglycerin monostearate and boric acid, a sodium salt of a reactant of sorbitol monolaurate and boric acid, and calcium salt of a reactant of pentaerythritol monostearate and boric acid, but are not limited thereto. These compounds may be used alone or in a combination of two or more thereof.

The borate ester surfactant according to the present invention which is obtained by reacting a higher fatty acid with a compound given by esterifying a polyol with boric acid can be obtained by a known method.

The esterification reaction between a polyol and boric acid can be performed by a known method. The molecular ratio in the reaction is not especially limited, but 0.5 to 2.0 mol of the boric acid to 1 mol of a polyol is preferable. Further, the reaction of a higher fatty acid with a compound given by esterifying a polyol with boric acid can be performed by a known method. The molecular ratio in the reaction is not especially limited, but 1.0 to 2.0 mol of the higher fatty acid to 1 mol of a compound given by esterifying a polyol with boric acid is preferable.

Examples of the borate ester surfactant obtained by the above-mentioned method, glycerin, diglycerin, or polyglycerin as a base, include the respective glycerol borate-laurate, glycerol borate-palmitate, glycerol borate-stearate, glycerol borate-oleate, glycerol borate-isostearate, and glycerol borate-hydroxystearate; and alkylene oxide adduct such as polyoxyethylene glycerol borate-laurate, polyoxyethylene glycerol borate-palmitate, polyoxyethylene glycerol borate-stearate, polyoxyethylene glycerol borate-oleate, polyoxyethylene glycerol borate-isostearate, polyoxyalkylene borate-stearate; sodium salts of diglycerol borate-laurate and glycerol borate-laurate; a potassium salt of diglycerol borate-stearate; and a calcium salt of polyoxyethylene glycerol borate-isostearate, but are not limited thereto. These compounds may be used alone or in a combination of two or more thereof.

The amount of a surfactant according to the present invention added to a biodegradable polyester resin is 0.05 to 10.0% by weight, preferably 0.1 to 5.0% by weight, and further preferably 0.5 to 2.0% by weight. The antistatic properties and lubricity are improved in proportion to the content of the surfactant according to the present invention. However, when the content is higher than 10.0% by weight, the improvements in the antistatic properties and lubricity are not high, and the excessive addition causes an increase of the cost and adversely affects on the mechanical properties of the resin.

The biodegradable polyester resin composition containing 0.05 to 10.0% by weight of the borate ester surfactant according to the present invention can achieve excellent antistatic properties and lubricity. Specifically, according to the present invention, a biodegradable polyester resin composition having a dynamic friction coefficient of 0.4 or less and a logarithm of the surface inherent resistivity of 13.0 [$\Omega$] or less can be obtained.

In addition, a biodegradable polyester resin composition can be imparted with a defogging property, flexibility, and plasticity by mixing the surfactant according to the present invention thereto. Further, the decrease in the molecular weight of the biodegradable polyester resin caused by the addition of the surfactant is small.

It is desirable to previously dry the surfactant of the present invention in order to avoid the hydrolysis of a biodegradable polyester resin by moisture. The moisture content in the surfactant is preferably not more than 1.0% by weight.

Furthermore, according to need, a known anionic surfactant, cationic surfactant, nonionic surfactant, or amphoteric surfactant may be used alone or in a combination of two or more thereof, in addition to the surfactant of the present invention in the range that the object of the present invention is not adversely affected.

The biodegradable polyester resin according to the present invention will now be described.

The biodegradable polyester resin used in the present invention is, for example, one or more aliphatic polyesters or aromatic polyesters selected from hydroxycarboxylic acids, aliphatic polyols, aromatic polyols, aliphatic polycarboxylic acids and aromatic polycarboxylic acids. The biodegradable polyester resin is a thermoplastic resin having biodegradability.

The biodegradable polyester resin may have a conformation of a homopolymer or copolymer (random, block, comb, and so on). Examples of the resin include polylactic acid resins which will be described below, polyethylene succinate resins, polyethylene succinate adipate resins, polybutylene succinate resins, polybutylene succinate adipate resins, polybutylene succinate carbonate resins, polyethylene carbonate resins, polyethylene terephthalate adipate resins, polybutylene succinate terephthalate resins, polybutylene adipate terephthalate resins, polycaprolactone resins, and polyglycolic acid resins.

In particular, the polylactic acid resins described below, polylactic acid, polycaprolactone, polybutylene succinate, polybutylene succinate adipate, polybutylene terephthalate adipate, and polyethylene terephthalate adipate are preferable, because they are already commercially available and are inexpensive and readily available.

The monomer units constituting these compounds may be chemically modified, or different monomer units may constitute a copolymer. Further, the biodegradable polyester resin may be a copolymer of a mixture of monomers constituting the above-mentioned resins and one or more of hydroxycarboxylic acids such as glycolic acid and 3-hydroxybutyric acid, polycarboxylic acids such as succinic acid and adipic acid, polysaccharides such as cellulose acetate and ethylcellulose, and polyols such as ethylene glycol and diethylene glycol. Furthermore, a resin such as a starch resin, chitosan resin, polyvinyl alcohol resin, or petroleum resin may be used together with the resin of the present invention in the range that the object of the present invention is not adversely affected.

The molecular weight of the biodegradable polyester resin used in the present invention is preferably 60000 to 1000000, more preferably 80000 to 500000, and most preferably 100000 to 300000 as a weight-average molecular weight (Mw). In general, when the weight-average molecular weight (Mw) is lower than 60000, the mechanical properties of a molded product obtained by molding the resin composition may be insufficient. On the other hand, when the molecular weight is higher than 1000000, the melting viscosity may become significantly high to make the processing treatment difficult and the manufacturing cost may be unnecessarily increased.

Similarly, the molecular weight distribution (Mw/Mn) is also not especially limited as long as the resin is substantially processable and has substantially sufficient mechanical properties, but is, in general, preferably 1.5 to 8, more preferably 2 to 6, and most preferably 2 to 5.

In the present invention, the term polylactic acid resin means a polymer composition of which main component is a polymer containing a lactic acid unit in an amount of 50% by weight or more, preferably 75% by weight or more. The lactic acid used as a raw material may be L-lactic acid, D-lactic acid, DL-lactic acid, a mixture thereof, or lactide, which is a cyclic dimer of lactic acid.

In addition, the term polyethylene succinate resin means a polymer composition of which main component is a polymer containing an ethylene succinate unit in an amount of 50% by weight or more, preferably 75% by weight or more. The same applies to the other cited biodegradable resins described above.

[Constituent ratio of lactic acid unit in polylactic acid resin]

The constitution of a lactic acid unit in a polylactic acid resin is L-lactic acid, D- lactic acid, and a mixture thereof, which can be optionally selected according to the use. In a polylactic acid resin composed of polylactic acid, when L-lactic acid is the main component, D-lactic acid : L-lactic acid is preferably 1 : 99 to 30 : 70. In addition, two or more types of polylactic acid containing D-lactic acid and L-lactic acid at different constituent ratios may be blended. Conversely, when D-lactic acid is the main component, L-lactic acid : D-lactic acid is preferably 1 : 99 to 30 : 70. In addition, two or more types of polylactic acid containing D-lactic acid and L-lactic acid at different constituent ratios may be blended.

The polylactic acid resin may contain a component other than lactic acid, in the range that the object of the present invention is not adversely affected. The component may be an aliphatic hydroxycarboxylic acid having 2 to 10 carbon atoms, or an aliphatic dicarboxylic acid or aliphatic diol or may be an aromatic compound such as terephthalic acid. A homopolymer or copolymer of which main component is the above-mentioned components or a mixture thereof may be contained. Further, another resin may be mixed in the range that the physical properties of the present invention are not significantly deteriorated.

The biodegradable polyester resin used in the present invention is produced by a known process.

For example, in a case of a polylactic acid resin, which is preferably used in the present invention, a known process is used, such as a process in which lactic acid is directly polymerized by dehydration condensation or a method in which lactide, a cyclic dimer of lactic acid, is polymerized through ring-opening, but the method is not to limited to them. A polylactic acid resin can be produced by publicly known and used processes as follows:

(1) a process in which lactic acid or a mixture of lactic acid and an aliphatic hydroxycarboxylic acid is used as a raw material and is directly polymerized by dehydration condensation (a preparation process disclosed in, for example, U.S. Patent No. 5,310,865);
(2) a process of ring-opening polymerization in which a cyclic dimer of lactic acid (lactide) is subjected to melt polymerization (a preparation process disclosed in, for example, U.S. Patent No. 2,758,987);
(3) a process of ring-opening-polymerization in which a cyclic dimer of lactic acid and an aliphatic hydroxycarboxylic acid, for example, lactide or glycolide and ε-caprolactone, are subjected to melt polymerization in the presence of a catalyst (a manufacturing method disclosed in, for example, U.S. Patent No. 4,057,537);
(4) a method in which a mixture of lactic acid, aliphatic dihydric alcohol, and aliphatic dibasic acid is directly polycondensed with dehydration (a preparation process disclosed in, for example, U.S. Patent No. 5,428,126);
(5) a process in which polylactic acid and a polymer of aliphatic dihydric alcohol and aliphatic dibasic acid are condensed in the presence of an organic solvent (a preparation process disclosed in, for example, EP Publication No. 0712880); or
(6) a process in which solid-phase polymerization is carried out at least in a partial process when a polyester polymer is produced by a dehydration polycondensation reaction of lactic acid in the presence of a catalyst.

However, the process is not especially limited to the above. In addition, copolymerization may be carried out in co-existence of a small amount of an aliphatic polyol such as trimethylolpropane or glycerin, an aliphatic polybasic acid such as butanetetracarboxylic acid, or a polyol such as polysaccharides. Further, the molecular weight may be increased by using a binder (polymer chain extender) such as a diisocyanate compound.

The biodegradable polyester resin of the present invention may be added with various additives such as a plasticizer, a compatibilizing agent, an antioxidant, a lubricant, a colorant, an ultraviolet absorber, a light stabilizer, a pigment and an inorganic filler, and a modifier, and a filler as additional components in the range that the object of the present invention is not adversely affected.

The biodegradable polyester resin of the present invention may be mixed with a resin other than the above-exemplified biodegradable polyester resins in the range that the object of the present invention is not adversely affected. For example, a resin made of a fossil resource, such as polypropylene, polyethylene, or polyvinyl chloride, may be mixed as an additional component.

The biodegradable polyester resin is preferably dried in order to suppress the hydrolysis of the resin by moisture in the process under heating.

The addition of a surfactant of the present invention can be carried out by a known method. Usually, a surfactant is mixed with a biodegradable polyester resin in a powder or pellet state using a ribbon blender or the like. Then, the resulting composition is extruded by a single screw extruder or a twin-screw extruder into a pellet shape for being used in molding.

Examples of the molding process are as follows: (1) a process in which the pellet prepared by the above-mentioned method is supplied to a molding machine; (2) a process in which a surfactant is melt-kneaded together with a pellet of a biodegradable polyester resin by a twin-screw extruder while feeding the surfactant concurrently and then the kneaded product is supplied to a molding machine; and (3) a method in which a biodegradable polyester resin composition containing a surfactant in a high concentration (master batch) which is used as a master batch for modification is produced once, this master batch is mixed and diluted with pellets of a biodegradable polyester resin, and the mixture is supplied to a molding machine.

When the master batch process of the above (3) is employed, the dilution ratio of the master batch for modification varies depending on the concentration of the surfactant in the master batch, but is usually 2 to 50 times, preferably 3 to 40 times, more preferably 5 to 30 time, and further preferably 7 to 30 times. In such ranges, the surfactant can be homogeneously dispersed and therefore can be suitably used.

When a master batch with a high concentration is produced, it is preferable to use a compatibilizing agent for improving the compatibility between a biodegradable polyester resin and a surfactant. Melt-kneading at a high concentration is possible by adding a compatibilizing agent when a biodegradable polyester resin and a surfactant are melt-kneaded, and the preservation stability of the resulting pellet is improved, such effects can be achieved.

Examples of the compatibilizing agent used in the present invention include ester compounds such as glycerin fatty acid ester, diglycerin fatty acid ester, polyglycerin fatty acid ester, sorbitol fatty acid ester, sorbitan fatty acid ester, pentaerythritol fatty acid ester, trimethylolpropane fatty acid ester, sucrose fatty acid ester, and citric acid fatty acid ester; ether compounds such as polyalkyleneglycol polyoxyalkylene alkylether, polyoxyalkylene alkylphenylether, and polyoxyethylene polyoxypropylene glycolether; ester-ether compounds such as polyalkyleneglycol fatty acid ester, polyoxyalkylene glycerin fatty acid ester, polyoxyalkylene diglycerin fatty acid ester, polyoxyalkylene polyglycerin fatty acid ester, polyoxyalkylene sorbitol fatty acid ester, polyoxyalkylene sorbitan fatty acid ester, polyoxyalkylene pentaerythritol fatty acid ester, polyoxyalkylene trimethylolpropane fatty acid ester, and polyoxyalkylene sucrose fatty acid ester; and reactants of the above-mentioned ester or ether compound and an inorganic acid such as phosphoric acid.

The addition amount of the compatibilizing agent is preferably 10 to 300 parts by weight, more preferably 20 to 200 parts by weight, further preferably 50 to 200 parts by weight, and most preferably 75 to 150 parts by weight, per 100 parts by weight of a surfactant.

In a preferable biodegradable polyester resin composition (master batch) containing such a surfactant and, in some instances, a compatibilizing agent in a high concentration, the content of the surfactant is 1 to 100 parts by weight, preferably 2 to 50 parts by weight, and more preferably 5 to 30 parts by weight, per 100 parts by weight of the biodegradable polyester resin. The kneading of a master batch and a biodegradable polyester resin can be also carried out by a known method.

[Molded product and method of producing thereof]

The biodegradable polyester resin composition according to the present invention is a material suitable for being applied to a publicly known and used molding. The resulting molded product is not especially limited, and examples thereof include a film or sheet, a monofilament, a multifilament such as fibers and nonwoven fabrics, and hot-molded product such as an injection molded product, a blow molded product, a laminated product, a foamed product and vacuum formings.

In addition, the biodegradable polyester resin composition according to the present invention is excellent in the moldability on orientation and crystallization by stretching. Since the effect of the present invention is remarkably exhibited thereupon, it is preferred for the production of a film or sheet, a tape yarn, a stretched blow molded product, and a (mono- or multi-) filament which are obtained by stretching/drawing.

Examples of the method for forming a molded product using the biodegradable polyester resin composition according to the present invention include an injection molding process, a blow molding process (injection stretching/drawing blow, extrusion stretching/drawing blow and direct blow), a balloon process, an inflation molding process, a co-extrusion process, a calender ing process, a hot pressing process, a solvent casting method, a (stretching/drawing) extrusion process, an extrusion lamination process with paper or aluminum, contour extrusion molding, thermoforming such as vacuum (air-pressure) forming, melt spinning (monofilament, multifilament, spun-bonding, melt-blowing, a fibrillated film yarn process, and the like), a foaming molding and a compression molding. The biodegradable polyester resin composition can be applied to any process.

In particular, in a molding process such as extrusion molding or melt spinning, which contains steps of orientation or crystallization by stretching/drawing, the practical strength and the appearance, such as strength, heat resistance, impact resistance, transparency, of the resulting molded product can be improved.
Therefore, the molding process is more preferably used.

The molded product obtained using the biodegradable polyester resin composition according to the present invention encompasses, for example, molded products obtained by a publicly known and used process, and the shape, size, thickness, design and the like thereof are not limited at all.

[Specific examples of the use]

The molded products, such as a bottle, a film or sheet, a hollow tube, a laminated product, a vacuum (air-pressure) molded container, (mono- or multi-) filament, nonwoven fabrics and a foamed product, obtained by the above-mentioned molding processes using the biodegradable polyester resin composition according to the present invention can be suitably used in a wide range of applications as materials for various types of packaging films for foods, electronics, medical products, pharmaceuticals and cosmetics, for example, a shopping bag, a paper bag, a shrink film, a disposal bag, a compost bag, a lunch box, a container for prepared foods, a packaging film for foods and confections, a wrapping film for foods, a wrapping film for cosmetics and perfumes, a diaper, a sanitary napkin, a wrapping film for medicines, a wrapping film for pharmaceuticals, a wrapping film for a surgical patch drug applied to stiff shoulder, sprain and the like, a film for agriculture and horticulture, a wrapping film for agricultural chemicals, a film for green houses, a bag for fertilizers, a packaging band, a packaging film for a magnetic tape cassette such as those for video, audio, and the like, a wrapping form for flexible disks, a film for plate making, an adhesive tape, a tape, a yarn, a pot for raising seedling, a waterproof sheet, a soil bag, a building film, a weed-control sheet, and a vegetation net; and as materials for used in the fields of electrical and automobile manufactures, and agriculture, civil engineering and fishery.

EXAMPLES

The present invention will now be specifically described with reference to Examples A and B, but the present invention is not limited to these Examples.

[Example A] Example of a reactant of boric acid and a higher fatty acid ester of a polyol

<A-1> Synthesis of Surfactant a

Glycerin (1.0 mol) and lauric acid (1.0 mol) were charged in a glass autoclave and were heated up to 220 to 250°C in the presence of 0.3% by weight of potassium hydroxide while introducing nitrogen gas for synthesizing glycerin monolaurate (including diester or higher polyester as by-products, hereinafter the same applies to the similar cases) by esterification for 5 hours. Then, 1.0 mol of boric acid per 1.0 mol of the synthesized glycerin monolaurate was charged and gradually heated to 130 to 135°C for dehydration and then gradually heated up to 230°C to synthesize a desired reactant of glycerin monolaurate and boric acid (referred to as Surfactant *a*). The resulting Surfactant *a* is used for evaluation of Examples and Comparative Examples below.

<A-2> Synthesis of Surfactants *b* to *e*

Higher fatty acid esters of polyols were synthesized by the same synthesis method as in Surfactant a according to the prescription shown in Table 1, and then the resulting compounds were reacted with boric acid. The resulting Surfactants b to e are used for evaluation of Examples below.

<A-3> Synthesis of Surfactant f

The above-mentioned Surfactant *a* (1.0 mol) was dissolved in methanol. The resulting solution was neutralized with a 3.0 mol NaOH aqueous solution, and then directly purified by recrystallization to give Surfactant f. The given Surfactant *f* is used for evaluation of Examples below.

<A-4> Synthesis of Surfactant g

Glycerin (1.0 mol) and lauric acid (1.0 mol) were charged in a glass autoclave and were heated up to 220 to 250°C in the presence of 0.3% by weight of potassium hydroxide while introducing nitrogen gas for synthesizing glycerin monolaurate (referred to as Surfactant g) by esterification for 5 hours. The resulting Surfactant g is used for evaluation of Comparative Examples below.

[Table 1]

|  |  | a | b | c | d | e | f | g |
|---|---|---|---|---|---|---|---|---|
| Polyol (mol) | Glycerin | 1.0 | 1.0 | - | - | - | 1.0 | 1.0 |
|  | Diglycerin | - | - | 1.0 | - | - | - | - |
|  | Sorbitol | - | - | - | 1.0 | - | - | - |
|  | Polyoxyethylene (20) sorbitol | - | - | - | - | 1.0 | - | - |
| Fatty acid (mol) | Lauric acid | 1.0 | - | 2.0 | 1.0 | - | 1.0 | 1.0 |
|  | Stearic acid | - | 1.0 | - | - | 1.0 | - | - |
| Boric acid (mol) |  | 1.0 | 1.0 | 2.0 | 1.0 | 1.0 | 1.0 | - |
| NaOH (mol) |  | - | - | - | - | - | 3.0 | - |

[Examples 1 to 10]

Each of the above-mentioned Surfactants *a* to *f* of the present invention was added to 100 parts by weight of a biodegradable polyester resin in the content shown in Table 2, and the resulting mixtures were melted and kneaded using a laboplasto mill and a roller mixer (manufactured by Toyo Seiki Seisakusyo Co., Ltd.) at 200°C. The kneaded resins were molded into sheets each having a thickness of 2 mm, a length of 100 mm and a width of 100 mm with a press. These sheets were left stand under conditions with constant temperature and humidity at a temperature of 23°C and a relative humidity of 50% for 14 days and were evaluated for molecular weight retention, antistatic properties, and transparency. The results are shown in Table 2 as Examples 1 to 10.
In the biodegradable polyester resins in Examples 1 to 8, polylactic acid (LACEA H-100: available from Mitsui Chemicals Inc.) was used. In the biodegradable polyester resins in Examples 9 and 10, a resin mixture of polylactic acid (LACEA H-100)/succinate polyester (BIONOLLE 3001: manufactured by Showa Highpolymer K.K.) = 70% by weight/ 30% by weight was used.

[Comparative Examples 1 to 4]

Surfactant a according to the present invention or Comparative Compound g was added to polylactic acid (LACEA H-100) in the concentration shown in Table 2. The resulting mixtures were formed into sheets as in Examples above, and the evaluation results of the sheets are shown in Table 2 as Comparative Examples 1 to 4.

<Evaluation method>

Actual performance evaluation of the sheets was conducted by the following methods:

(1) Molecular weight retention (Mw)

A TSKgel SUPER HZM-M chromatography column (manufactured by Tosoh Corp.) was mounted on chromatography SCL-10Avp (manufactured by Shimadzu Corp.). The measurement was performed using chloroform as the eluting solvent under conditions of a flow rate of 0.6 ml/min, a column temperature of 40°C, a sample concentration of 0.05% by weight, a sample injection volume of 50 µl, and an RI detector. The weight-average molecular weight of each sheet was calculated as polystyrene equivalent. The weight-average molecular weights of polystyrene used as the standard were 1090000, 706000, 355000, 190000, 96400, 37900, 19600, 10200, 5570, 2630, 870, and 500. The molecular weight retention was determined using the following formula:

Molecular weight retention = [(weight-average molecular weight of sheet/weight-average molecular weight of raw material pellet)] × 100

The molecular weight retention was evaluated on the basis of the following criteria:

95% or more: ○ (excellent)
90% to 95%: Δ (good)
Less than 90%: × (poor)

(2) Antistatic property

The surface inherent resistivity of each molded sheet was measured according to JIS-K-6911 (using a super insulation tester P-616 manufactured by Kawaguchi Denki Seisakusyo Corp.). A smaller value indicates a better antistatic property. The target logarithm value (of surface inherent resistivity Ω) is 13 or less. (3) Transparency

The HAZE value of each molded sheet was measured with a HAZE meter (HAZEMETER TC-HIIIDPK manufactured by Tokyo Denshoku Co., Ltd.) and evaluated using the difference value ΔHAZE from that of a surfactant-free sheet. A smaller ΔHAZE value indicates the transparency closer to that of the surfactant-free sheet. The target value of ΔHAZE is 10 or less.

[Table 2]

|  | Surfactant | Type | Content (% by weight) | Molecular weight retention | Surface inherent resistivity LOG (Ω) | ΔHAZE |
|---|---|---|---|---|---|---|
| Example 1 | a | Reactant of glycerin monolaurate and boric acid | 0.5 | 99.0 | 12.9 | 0.6 |
| Example 2 | a | Reactant of glycerin monolaurate and boric acid | 1.0 | 98.5 | 12.5 | 1.5 |
| Example 3 | a | Reactant of glycerin monolaurate and boric acid | 10.0 | 98.2 | 12.2 | 8.9 |
| Example 4 | b | Reactant of glycerin monostearate and boric acid | 1.0 | 98.3 | 12.3 | 3.3 |
| Example 5 | c | Reactant of diglycerin dilaurate and boric acid | 1.0 | 98.1 | 12.2 | 1.9 |
| Example 6 | d | Reactant of sorbitol monolaurate and boric acid | 1.0 | 98.6 | 12.0 | 2.4 |
| Example 7 | e | Reactant of polyoxyethylene (20) sorbitol monostearate and boric acid | 1.0 | 98.2 | 12.1 | 0.8 |

(continued)

| | Surfactant | Type | Content (% by weight) | Molecular weight retention | Surface inherent resistivity LOG (Ω) | ΔHAZE |
|---|---|---|---|---|---|---|
| Example 8 | f | Sodium salt of reactant of glycerin monolaurate and boric acid | 1.0 | 97.5 | 12.3 | 1.1 |
| Example 9 | a | Reactant of glycerin monolaurate and boric acid | 1.0 | 98.7 | 12.0 | 2.6 |
| Example 10 | d | Reactant of sorbitol monolaurate and boric acid | 1.0 | 98.3 | 12.1 | 0.9 |
| Comparative Example 1 | a | Reactant of glycerin monolaurate and boric acid | 0.01 | 99.5 | 14.8 | 0.1 |
| Comparative Example 2 | a | Reactant of glycerin monolaurate and boric acid | 15.0 | 96.2 | 12.1 | 12.3 |
| Comparative Example 3 | g | Glycerin monolaurate | 1.0 | 94.8 | 14.6 | 3.2 |
| Comparative Example 4 | g | Glycerin monolaurate | 10.0 | 93.2 | 13.8 | 16.5 |

(4) Lubricity

The lubricity of the sheets of Examples 1 to 10, Comparative Examples 1 to 4, and sheets prepared by the same method as above using surfactant-free polylactic acid resin (LACEA H-100) or mixing 1.0 part by weight of erucic acid amide per 100 parts by weight of the resin was evaluated according to JIS K7125-ISO8295 using a Tribogear TYPE HEIDON-14DR (manufactured by HEIDON). The results are shown in Table 3.

[Table 3]

| | Lubricity (dynamic friction coefficient) |
|---|---|
| Example 1 | 0.28 |
| Example 2 | 0.30 |
| Example 3 | 0.10 |
| Example 4 | 0.25 |
| Example 5 | 0.30 |
| Example 6 | 0.25 |
| Example 7 | 0.27 |
| Example 8 | 0.30 |
| Example 9 | 0.25 |

(continued)

|  | Lubricity (dynamic friction coefficient) |
|---|---|
| Example 10 | 0.26 |
| Comparative Example 1 | 0.45 |
| Comparative Example 2 | 0.20 |
| Comparative Example 3 | 0.50 |
| Comparative Example 4 | 0.45 |
| Erucic acid amide | 0.45 |
| No addition | 0.55 |

As shown in Table 2, the biodegradable polyester resin compositions containing surfactants according to the present invention, which are shown as Examples 1 to 10, can achieve excellent antistatic properties while maintaining the transparency of the resin. In addition, as shown in Table 3, the molded products, such as a sheet, made from the biodegradable polyester resin compositions can also impart lubricity to the surfaces thereof.

[Example B] Example of reactant of higher fatty acid and boric acid ester of polyol

<B-1> Synthesis of Surfactant *h*

Diglycerin (1.0 mol) and boric acid (1.0 mol) were charged in a glass autoclave and were heated up to 220 to 250˚C while introducing nitrogen gas to synthesize glycerin borate by esterification for 5 hours. Then, 1.0 mol of oleic acid per 1.0 mol of the synthesized glycerin borate was charged and heated up to 220 to 250˚C in the presence of 0.3% by weight of potassium hydroxide while introducing nitrogen gas to synthesize the target diglycerin borate oleate (referred to as Surfactant h; including diester or higher polyester as by-products, hereinafter the same applies to the similar cases) by esterification for 5 hours. The resulting Surfactant *h* is used for evaluation of Examples and Comparative Examples below.

<B-2> Synthesis of Surfactants *i* and *j*

Borate esters of polyols were synthesized by the same method as in Surfactant h according to the prescription shown in Table 4, and then the resulting compounds were reacted with higher fatty acids. The resulting Surfactants *i* and *j* are used for evaluation of Examples below.

<B-3> Synthesis of Surfactant *k*

Glycerin (1.0 mol) and stearic acid (1.0 mol) were charged in a glass autoclave and heated up to 220 to 250˚C in the presence of 0.3% by weight of potassium hydroxide while introducing nitrogen gas to synthesize glycerin stearate (referred to as Surfactant k) by esterification for 5 hours. The resulting Surfactant k is used for evaluation of Comparative Examples below.

[Table 4]

|  |  | h | i | j | k |
|---|---|---|---|---|---|
| Polyol (mol) | Diglycerin | 1.0 | - | - | - |
|  | Glycerin | - | 1.0 | - | 1.0 |
|  | Polyoxyethylene (3) glycerin | - | - | 1.0 | - |
| Boric acid (mol) |  | 1.0 | 1.0 | 2.0 | 1.0 |
| Fatty acid (mol) | Oleic acid | 1.0 | - | 1.0 | - |
|  | Stearic acid | - | 1.0 | - | 1.0 |

[Examples 11 to 16]

Each of the borate ester surfactants shown in Table 4 was added to 100 parts by weight of a biodegradable polyester resin in the concentration shown in Table 5, and the resulting mixtures were melted and kneaded using a laboplasto mill and a roller mixer (manufactured by Toyo Seiki Seisakusyo Co., Ltd.) at 200˚C. The kneaded resins were molded into sheets each having a thickness of 2 mm, a length of 100 mm and a width of 100 mm with a press. These sheets were left stand under conditions with constant temperature and humidity at a temperature of 23˚C and a constant relative humidity of 50% for 14 days and were evaluated for molecular weight retention, antistatic property, and transparency. The evaluation results are shown in Table 5 as Examples 11 to 16.

In the biodegradable polyester resins in Examples 11 to 15, polylactic acid (LACEA H-1 00: available from Mitsui Chemicals Inc.) was used. In the biodegradable polyester resin in Example 16, a resin mixture of polylactic acid (LACEA H-100)/succinate polyester (BIONOLLE 3001 manufactured by Showa Highpolymer K.K.) = 70% by weight/ 30% by weight was used.

[Comparative Examples 5 to 8]

Surfactant *h* of the present invention or Comparative Compound k was added to polylactic acid (LACEA H-100) in the concentration shown in Table 5. The resulting mixtures were formed into sheets as in Examples above, and the evaluation results of the sheets are shown in Table 5 as Comparative Examples 5 to 8.

<Evaluation method>

Actual performance evaluation of the sheets was conducted by the same method as described above.

[Table 5]

| | Surfactant | Type | Content (% by weight) | Molecular weight retention | Surface inherent resistivity LOG ($\Omega$) | $\Delta$HAZE |
|---|---|---|---|---|---|---|
| Example 11 | h | Diglycerol borate monooleate | 0.5 | 99.1 | 13.0 | 3.0 |
| Example 12 | h | Diglycerol borate monooleate | 1.0 | 98.2 | 12.5 | 4.0 |
| Example 13 | h | Diglycerol borate monooleate | 5.0 | 98.0 | 12.0 | 6.5 |
| Example 14 | i | Glycerol borate monostearate | 1.0 | 98.1 | 12.2 | 6.0 |
| Example 15 | j | Polyoxyethylene (3) glycerol borate monooleate | 1.0 | 98.3 | 11.8 | 5.2 |
| Example 16 | j | Polyoxyethylene (3) glycerol borate monooleate | 3.0 | 98.0 | 11.5 | 6.5 |
| Comparative Example 5 | h | Diglycerol borate monooleate | 0.01 | 99.4 | 14.5 | 1.0 |
| Comparative Example 6 | h | Diglycerol borate monooleate | 15.0 | 96.0 | 11.0 | 12.0 |
| Comparative Example 7 | k | Glycerin monostearate | 1.0 | 93.7 | 14.5 | 13.0 |
| Comparative Example 8 | k | Glycerin monostearate | 5.0 | 92.9 | 14.2 | 34.0 |

The lubricity of the sheets of Examples 11 to 16, Comparative Examples 5 to 8 and the above-mentioned sheets of the surfactant-free polylactic acid resin (LACEA H-100) and of containing erucic acid amide per 100 parts by weight of the resin was evaluated as in above. The results are shown in Table 6.

[Table 6]

|  | Lubricity (dynamic friction coefficient) |
|---|---|
| Example 11 | 0.34 |
| Example 12 | 0.30 |
| Example 13 | 0.20 |
| Example 14 | 0.28 |
| Example 15 | 0.32 |
| Example 16 | 0.25 |
| Comparative Example 5 | 0.52 |
| Comparative Example 6 | 0.25 |
| Comparative Example 7 | 0.50 |
| Comparative Example 8 | 0.48 |
| Erucic acid amide | 0.45 |
| No addition | 0.55 |

As shown in Table 5, the biodegradable polyester resin compositions containing surfactants according to the present invention, which are shown as Examples 11 to 16, can achieve excellent antistatic properties while maintaining the transparency of the resin. In addition, as shown in Table 6, the molded products, such as a sheet, made from the biodegradable polyester resin compositions can also impart lubricity to the surfaces thereof.

**Claims**

1.    A biodegradable polyester resin composition containing 0.05 to 10.0% by weight of a borate ester surfactant having one or more hydrophobic groups having 8 to 24 carbon atoms.

2.    The biodegradable polyester resin composition according to claim 1, wherein the borate ester surfactant is a reactant of boric acid and a compound given by esterifying a polyol with a higher fatty acid or is a salt of the reactant.

3.    The biodegradable polyester resin composition according to claim 1, wherein the borate ester surfactant is a reactant of a higher fatty acid and a compound given by esterifying a polyol with boric acid or is a salt of the reactant.

4.    The biodegradable polyester resin composition according to any one of claims 1 to 3, wherein the biodegradable polyester resin composition has a dynamic friction coefficient of 0.4 or less and a surface inherent resistivity of 1.0E + 13 [$\Omega$] or less.

5.    The resin composition according to any one of claims 1 to 4, wherein the biodegradable polyester resin is a polylactic acid resin.

6.    A resin molded product composed of a resin composition according to any one of claims 1 to 5.

7.    The resin molded product according to claim 6, wherein the molded product is a film or sheet.

8.    The resin molded product according to claim 6, wherein the molded product is an injection molded product.

9.    The resin molded product according to claim 6, wherein the molded product is a hot-molded product.

**10.** The resin molded product according to claim 6, wherein the molded product is a foamed product.

**11.** The resin molded product according to claim 6, wherein the molded product is a fiber, a monofilament, or a nonwoven fabric.

**12.** The resin molded product according to claim 6, wherein the molded product is a yarn.

**13.** The resin molded product according to claim 6, wherein the molded product is a laminated product.

**14.** The resin molded product according to claim 6, wherein the molded product is a bottle.

**INTERNATIONAL SEARCH REPORT**

| International application No. |
| --- |
| PCT/JP2005/000529 |

A. CLASSIFICATION OF SUBJECT MATTER
Int.Cl$^7$ C08L67/00, C08J9/04, C08K5/55

According to International Patent Classification (IPC) or to both national classification and IPC

B. FIELDS SEARCHED

Minimum documentation searched (classification system followed by classification symbols)
Int.Cl$^7$ C08L67/00-67/02, C08L67/04

Documentation searched other than minimum documentation to the extent that such documents are included in the fields searched
Jitsuyo Shinan Koho        1926-2005   Toroku Jitsuyo Shinan Koho   1994-2005
Kokai Jitsuyo Shinan Koho   1971-2005   Jitsuyo Shinan Toroku Koho   1996-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 7-150077 A  (Hitachi Chemical Co., Ltd.), 13 June, 1995 (13.06.95), Claims 1 to 3; Par. No. [0018] (Family: none) | 1-14 |
| E,X | JP 2005-23316 A  (Toho Chemical Industry Co., Ltd.), 27 January, 2005 (27.01.05), Claims 1 to 5 (Family: none) | 1,3,5,6 |

☐  Further documents are listed in the continuation of Box C.        ☐  See patent family annex.

| * Special categories of cited documents: | |
| --- | --- |
| "A"  document defining the general state of the art which is not considered   to be of particular relevance | "T"  later document published after the international filing date or priority date and not in conflict with the application but cited to understand the principle or theory underlying the invention |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 02 February, 2005 (02.02.05) | 22 February, 2005 (22.02.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10086307 A
- JP 1412687 A
- JP 9221587 A
- JP 10036650 A
- JP 1460603 A
- US 5310865 A
- US 2758987 A
- US 4057537 A
- US 5428126 A
- EP 0712880 A